# EUROPÄISCHE PATENTSCHRIFT

(11) **EP 1 151 883 B1**
(45) Veröffentlichungstag und Bekanntmachung des Hinweises auf die Patenterteilung: **22.03.2006**
(21) Anmeldenummer: 01108986.9
(22) Anmeldetag: 11.04.2001
(51) Int. Cl.: B60J 7/14

(54) **Cabriolet-Fahrzeug**
Convertible vehicle
Véhicule convertible

(30) Priorität: 02.05.2000 DE 10021333
(43) Veröffentlichungstag der Anmeldung: 07.11.2001
(73) Patentinhaber: Wilhelm Karmann GmbH, 49084 Osnabrück (DE)
(72) Erfinder: Russke, Klaus, 49143 Bissendorf (DE)
(74) Vertreter: Busse & Busse Patentanwälte

(56) Entgegenhaltungen:
- EP-A- 0 592 109
- DE-C- 4 344 373
- US-A- 5 490 709

## Beschreibung

Die Erfindung betrifft eine Cabriolet-Fahrzeug mit einem feste Dachteile aufweisenden Dach, gemäß dem Oberbegriff des Anspruchs 1.

Bei bekannten Cabriolet-Fahrzeugen mit festen Dachteilen (DE 299 16 003 U1) sind zwischen diesen befindliche Dichtungsteile besonders hohen Belastungen durch während der Fahrt auftretenden Winddruck ausgesetzt, so daß unerwünschte Bauteilverlagerungen auftreten können.

Die Erfindung befaßt sich mit dem Problem, ein Cabriolet-Fahrzeug mit einem feste Dachteile aufweisenden Dach zu schaffen, bei dem die Tragbaugruppen bzw. Dachteile mit geringem technischen Aufwand in der Schließstellung fixierbar und Bauteilverlagerungen im Verbindungsspalt zwischen den Dachteilen vermieden sind.

Die Erfindung löst dieses Problem durch ein Cabriolet-Fahrzeug mit den kennzeichnenden Merkmalen des Anspruchs 1. Hinsichtlich wesentlicher weiterer Ausgestaltungen wird auf die Ansprüche 2 bis 12 verwiesen.

Das erfindungsgemäß ausgebildete Cabriolet-Fahrzeug weist eine Dachkonstruktion mit festen Dachteilen auf, deren jeweilige seitliche Tragbaugruppen zusätzlich mit einem Schließkraftverstärker als im Bereich des Hauptlagers wirksame Baueinheit versehen sind. Der Schließkraftverstärker wird nach dem an sich bekannten Schließvorgang des Daches mit einem entsprechenden Antriebsorgan so aktiviert, daß den in ihre Schließstellung verlagerten Dachteilen zusätzlich eine in Schließrichtung verlaufende und als Spannkraft auf die Dichtungsteile wirksame Stellbewegung vermittelt wird. Diese Stellbewegung wird über die Tragbaugruppe und das hintere der Dachteile so auf die vorderen Dachteile übertragen, daß die Tragbaugruppen zusätzlich fixiert sind und jeweils zwischen den Dachteilen sowie zwischen vorderem Dachteil und Windschutzscheibenrahmen vorhandene Dichtungsteile in den Trennfugen eine zusätzliche Verspannung erfahren. Damit sind auch bei hohen Fahrgeschwindigkeiten Bauteilverlagerungen in der Dachkonstruktion vermieden.

Diese Schließkraftverstärkung kann mit einfachen mechanischen Mitteln optimal auf die jeweilige Dachkonstruktion und die Anzahl der Dachteile eingestellt werden, so daß ein während des Betriebes des Cabriolet-Fahrzeugs, insbesondere durch Unterdruck bei hohen Fahrgeschwindigkeiten, auftretender Aufbläheffekt im Bereich der Dachteile vermieden wird. Die Teile des Daches werden unter Wirkung des eine Verriegelungsstellung einnehmenden Schließkraftverstärkers in ihrer Optimalposition gehalten, die Dichtigkeit des Dach-Systems ist insgesamt zuverlässiger und durch optimale Dichtkräfte kann die Lebensdauer der Dichtelemente erhöht werden.

Weitere Einzelheiten und vorteilhafte Wirkungen der Erfindung ergeben sich aus der nachfolgenden Beschreibung und der Zeichnung, die ein Ausführungsbeispiel des Gegenstands der Erfindung näher veranschaulichen. In der Zeichnung zeigen:
- Fig. 1: eine Prinzipdarstellung eines drei Dachteile aufweisenden Cabriolet-Daches in Schließstellung,
- Fig. 2: eine Ausschnittsdarstellung des Daches gemäß Fig. 1, dessen hinteres Dachteil im Bereich des Hauptlagers mit einem in Öffnungsstellung befindlichen Schließkraftverstärker versehen ist und
- Fig. 3: eine Ausschnittsdarstellung ähnlich Fig. 2 mit dem Schließkraftverstärker in Schließstellung.

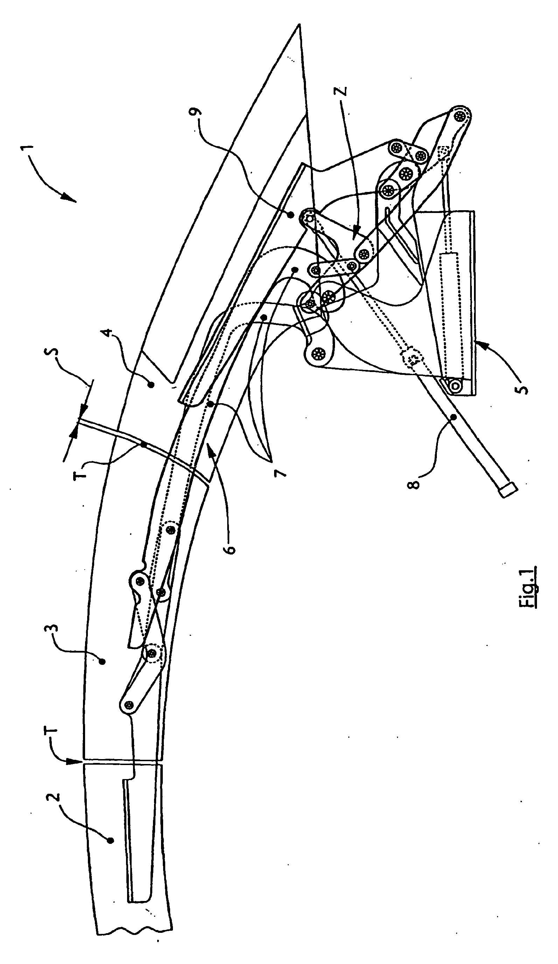

In Fig. 1 ist ein insgesamt mit 1 bezeichnetes Dach eines nicht näher veranschaulichten Cabriolet-Fahrzeugs dargestellt, wobei das Dach 1 drei Dachteile, nämlich ein vorderes 2, ein mittleres 3 und ein hinteres 4 aufweist. Das hintere Dachteil 4 bzw. das gesamte Dach 1 ist im Bereich eines der Fahrzeugkarosserie (nicht dargestellt) heckseitig zugeordneten Hauptlagers 5 durch jeweilige seitliche Tragbaugruppen 6 (von denen in der Seitenansicht gemäß Fig. 1 bis 3 nur eine Seite sichtbar ist) mit einem Hebelmechanismus 7 so abgestützt, daß das Dach 1 insgesamt von Hand oder durch ein Antriebsorgan 8 aus der dargestellten Schließstellung in eine Öffnungsstellung (nicht dargestellt) aufschwenkbar und aus dieser in die Schließstellung rückführbar ist. Das als Hydraulikzylinder ausgebildete Antriebsorgan 8 greift bei dieser Ausführung der Tragbaugruppe 6 über ein dem Hebelmechanismus 7 zugeordnetes, im folgenden nicht näher beschriebenes Zwischengetriebe Z an einem mit dem hinteren Dachteil 4 verbundenen Traghebel 9 an.

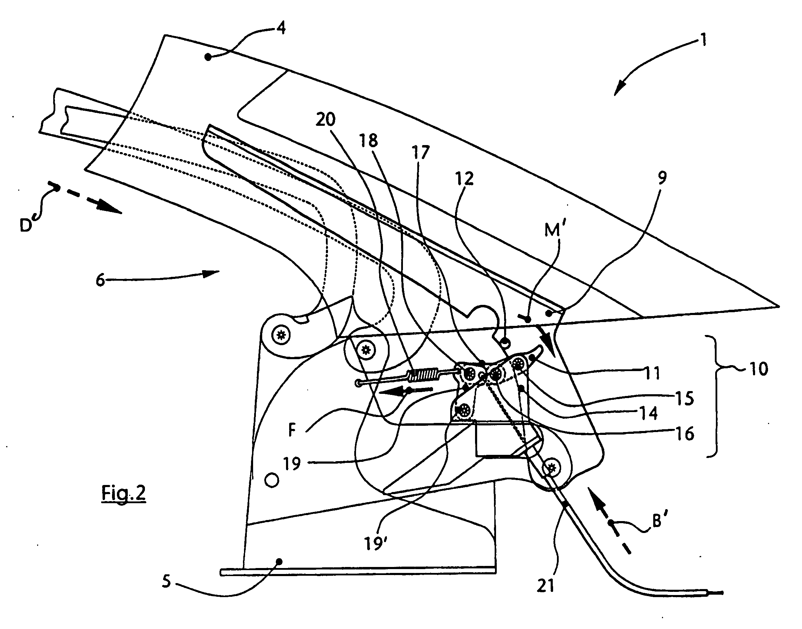

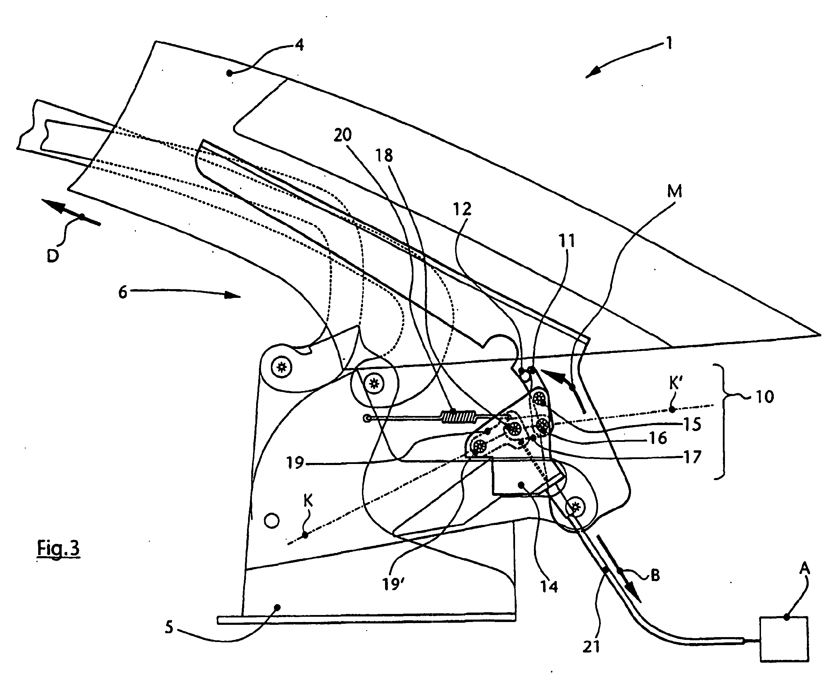

In Fig. 2 und Fig. 3 sind (zur Verdeutlichung von in der Bildebene verlaufenden Teilen) die Teile der Tragbaugruppe 6 und des Hebelmechanismus 7 nicht vollständig dargestellt. Vielmehr zeigen diese Darstellungen die wesentlichen Teile der erfindungsgemäßen Konstruktion, bei der im Bereich der Tragbaugruppe 6 ein unabhängig von dieser betätigbarer Schließkraftverstärker 10 vorgesehen ist.

Mit diesem Schließkraftverstärker 10 ist bei einem mehrteiligen Dach 1 der zwischen deren Dachteilen 2 und 3 bzw. 3 und 4 befindliche Bereich einer Trennfuge T (Fig. 1) bzw. die Trennfuge zum Bereich des Windschutzscheibenrahmens hin (nicht dargestellt) beeinflußbar. In der Darstellung bilden die Trennfugen T einen Spalt mit einem Maß S, in dem nicht näher dargestellte elastische Dichtungselemente eingebracht werden.

Nach der Bewegung des Daches 1 in die Schließstellung (Fig. 1) befinden sich das Antriebsorgan 8, die Tragbaugruppe 6 und auch der Traghebel 9 in der jeweiligen Endstellung. Zum Aufbau einer diese Endstellung stabilisierenden Bauteilverspannung zwischen den Dachteilen 2, 3 und 4 (und den mit diesen verbundenen Gestängeteilen) wird nunmehr mittels des Schließkraftverstärkers 10 eine zusätzliche Druckwirkung am hinteren Dachteil 4 erzeugt (Pfeil D, Fig. 3).

Der am Hauptlager 5 abgestützte Schließkraftverstärker 10 ist dazu mit einem am hinteren Dachteil 4 angreifenden Stellglied in Form eines Verriegelungshebels 11 versehen, der mittels eines nicht näher dargestellten Stellantriebes A und eines nachfolgend beschriebenen Hebelgetriebes an einem Mitnahmezapfen 12 anlegbar (Pfeil M) bzw. von diesem lösbar (Pfeil M') ist. Mit diesem Verriegelungshebel 11 wird damit dem Traghebel 9 der Tragbaugruppe 6 eine in Fahrtrichtung wirkende Stellkraft vermittelt und das Dachteil 4 kann in Pfeilrichtung D zu den vorgelagerten Dachteilen 2 und 3 hin so bewegt werden, daß diese Teile gemeinsam nach Art einer Spannungskette in Richtung zum Windschutzscheibenrahmen hin (nicht dargestellt) verspannt werden.

Die Darstellungen des Schließkraftverstärkers 10 gem. Fig. 2 und 3 verdeutlichen, daß dessen Verriegelungshebel 11 karosseriefest an einer Tragplatte 14 angelenkt ist (Gelenkpunkt 15) und über ein freies Gelenk 16 ist der Verriegelungshebel 11 mit einem mittleren Verbindungshebel 17 des Hebelgetriebes verbunden. Dieser Verbindungshebel 17 ist anderenends im Bereich eines Lagers 18 mit einer am Hauptlager 5 bzw. der Tragplatte 14 ortsfest in einem Schwenklager 19' gehaltenen Antriebsschwinge 19 verbunden. Der Verbindungshebel 17 und die Antriebsschwinge 19 sind im Bereich ihres gemeinsamen Verbindungslagers 18 bei Einleitung der Spannbewegung (Pfeil B, Fig. 3) durch den Antrieb A so weit verlagerbar, daß eine Verriegelungsstellung nach Art eines Kniehebels (Fig. 3, Strich-Punkt-Linie K,K') wirksam werden kann. Damit sind mit geringen Betätigungskräften hohe Verriegelungskräfte erreichbar.

In zweckmäßiger Ausführung greifen an der Antriebsschwinge 19 im Nahbereich ihres Gelenkpunktes (Lager 18) zum Verbindungshebel 17 hin sowohl eine am Hauptlager 5 gehaltene Zugfeder 20 (als Gegenhalter zur Spannbewegung gemäß Pfeil B) als auch der nicht näher dargestellte Stellantrieb A mittels eines Bowdenzuges 21 an. Denkbar ist auch, daß der Bowdenzug 21 am Verbindungshebel 17 angreift (nicht dargestellt) oder als separater Antrieb ein Elektromoter o. dgl. in die Karosserie integriert wird.

Die in Fig. 2 dargestellte Öffnungsstellung des Schließkraftverstärkers 10 verdeutlicht die Wirkung der Zugfeder 20, mittels deren Zugwirkung (Pfeil F) bei gelöstem Bowdenzug 21 (Pfeil B') die Antriebsschwinge 19 um ihr Schwenklager 19' verschwenkt wird, damit der nahe einer Totpunktstellung dargestellte Verbindungshebel 17 gelöst wird und der Verriegelungshebel 11 den Mitnahmezapfen 12 freigibt.

Bei einer nachfolgenden Einleitung der Schließbewegung im Bereich des Schließkraftverstärkers 10 (Pfeil B, Fig. 3) wird die Antriebsschwinge 19 entgegen der Kraftwirkung (Pfeil F, Fig. 2) der Zugfeder 20 verlagert und über den Verbindungshebel 17 wird die vorbeschriebene Anlage des Verriegelungshebels 11 am Mitnehmerzapfen 12 (Schwenkbewegung, Pfeil M) erreicht. Die damit bewirkte Verspannung der Dachteile 2, 3 und 4 mit den Gestängeteilen und dem Hauptlager 5 wird dadurch fixiert, daß der mittlere Verbindungshebel 17 eine im Wesentlichen als Übertotpunktstellung wirksame Lage einnehmen kann. Zum Lösen aus der denkbaren Übertotpunktstellung kann es erforderlich sein, der Zugfeder 20 einen Entriegelungsantrieb vorzuschalten (nicht dargestellt), um die Teile 17 und 19 in ihrer Winkelstellung zueinander zu verändern.

Die beschriebene und dargestellte Ausführung des Schließkraftverstärkers 10 ist an beiden Hauptlagern 5 des Daches 1 vorgesehen, so daß an dem Dach 1 eine gleichmäßige Stellbewegung erzeugt und im Bereich der Trennfuge T die Dichtungselemente gleichmäßig so verspannt werden, daß deren Funktion gewährleistet und Bauteilverlagerungen in der Trennfuge T, die während der Fahrt des Fahrzeuges zu ungewollten Geräuschen führen könnten, vermieden sind.

Die Wirkung des Schließkraftverstärkers 10 kann durch eine entsprechende Auslegung des Stellantriebes A und der Verriegelungskonstruktion optimal an unterschiedliche Konstruktionsmaße und -toleranzen im Bereich der Tragbaugruppe 6, der Dachteile 2, 3 und 4 und des Spaltmaßes S angepaßt werden. Insbesondere ist der Verriegelungshebel 11 mit einer den Mitnehmerzapfen 12 hintergreifenden Bogenkontur R (Fig. 2) als Anlagefläche versehen, so daß eine gleichmäßige Druckkraft D erzeugt werden kann.

In zweckmäßiger Ausführung sind die Bauteile des Schließkraftverstärkers 10 mit der Tragplatte 14 so verbunden; daß eine einfach auswechselbare und mit geringem Aufwand am Hauptlager 5 festlegbare Baueinheit gebildet ist.

## Patentansprüche

1. Cabriolet-Fahrzeug mit einem feste Dachteile aufweisenden Dach (1), das im Bereich eines der Fahrzeugkarosserie heckseitig zugeordneten Hauptlagers (5) durch jeweilige seitliche Tragbaugruppen (6) mit einem Hebelmechanismus (7) schwenkbeweglich so abgestützt ist, daß mittels diesem das Dach (1) von Hand oder durch ein Antriebsorgan (8) in die jeweilige Öffnungs- bzw. Schließstellung verlagerbar ist, **dadurch gekennzeichnet, daß** im Bereich der Tragbaugruppe (6) zumindest ein unabhängig von dieser betätigbarer Schließkraftverstärker (10) vorgesehen ist, über den in ihre Schließstellung zu verlagernde Dachteile eine in Schließrichtung gerichtete Stellbewegung vermittelbar ist.

2. Cabriolet-Fahrzeug nach Anspruch 1, **dadurch gekennzeichnet, daß** bei einem Dach (1) mit zwei oder mehr Dachteilen (2, 3 und 4) sowohl eine jeweils zwischen diesen als auch eine zum Windschutzscheibenrahmen hin vorgesehene Trennfuge (T) In ihrem Spaltmaß (S) durch den Schließkraftverstärker (10) beeinflußt wird.

3. Cabriotet-Fahrzeug nach Anspruch 2, **dadurch gekennzeichnet, daß** der Schließkraftverstärker (10) einen an jeweilige in den Trennfugen (T) vorgesehene Dichtungselemente anpaßbaren Stellweg aufweist.

4. Cabriolet-Fahrzeug nach einem der Ansprüche 1 bis 3, **dadurch gekennzeichnet, daß** der Schließkraftverstärker (10) bei Erreichen einer vorgegebenen Schließstellung der Dachteile (2, 3 und 4) verriegelbar ist.

5. Cabriolet-Fahrzeug nach einem der Ansprüche 1 bis 4, **dadurch gekennzeichnet, daß** der am Hauptlager (5) abgestützte Schließkraftverstärker (10) ein am hinteren der Dachteile (4) angreifendes Stellglied aufweist und dieses mit einem Stellantrieb (A) verbunden ist.

6. Cabriolet-Fahrzeug nach einem der Ansprüche 1 bis 5, **dadurch gekennzeichnet, daß** der Schließkraftverstärker (10) mit einer Hebelbaugruppe versehen ist, die einen an einem Mitnahmezapfen (12) der Tragbaugruppe (6) anlegbaren Verriegelungshebel (11) als Stellglied aufweist.

7. Cabriolet-Fahrzeug nach Anspruch 6, **dadurch gekennzeichnet, daß** der karosseriefest an einer Tragplatte (14) angelenkte Verriegelungshebel (11) über ein freies Gelenk (16) mit einem mittleren Verbindungshebel (17) verbunden ist und dieser andererseits an einer drehfest am Hauptlager (5) gehaltenen Antriebsschwinge (19) angelenkt ist.

8. Cabriolet-Fahrzeug nach Anspruch 7, **dadurch gekennzeichnet, daß** der Verbindungshebel (17) und die Antriebsschwinge (19) nach Art von Kniehebeln in die Verriegelungsstellung verlagerbar sind.

9. Cabriolet-Fahrzeug nach Anspruch 7 oder 8, **dadurch gekennzeichnet, daß** an der Antriebsschwinge (19) im Nahbereich ihres Gelenkpunktes (18) zum Verbindungshebel (17) sowohl eine am Hauptlager (5) gehaltene Zugfeder (20) als auch der Stellantrieb (A) angreifen.

10. Cabriolet-Fahrzeug nach einem der Ansprüche 5 bis 9, **dadurch gekennzeichnet, daß** der Stellantrieb (A) einen von Hand und/oder durch ein Antriebsorgan bewegbaren Bowdenzug (21) aufweist.

11. Cabriolet-Fahrzeug nach einem der Ansprüche 6 bis 10, **dadurch gekennzeichnet, daß** der Verriegelungshebel (11) eine den Mitnahmezapfen (12) hintergreifende Bogenkontur (R) als Anlagefläche aufweist.

12. Cabriolet-Fahrzeug nach einem der Ansprüche 7 bis 11, **dadurch gekennzeichnet, daß** die Bauteile des Schließkraftverstärkers (10) mit der Tragplatte (14) eine am Hauptlager festlegbare Baueinheit bilden.

## Claims

1. Convertible vehicle having a roof (1) having solid roof parts, which roof (1) is supported, in the region of a main mounting (5) associated with the vehicle bodywork at the rear thereof, by respective lateral supporting sub-assemblies (6) each having a lever mechanism (7), to be movable by pivoting in such a way that the roof (1) can be displaced to the lowered or raised position, as appropriate at the time, by hand or by a drive member (8) by means of the said lever mechanism (7), **characterised in that** there is provided in the region of the supporting sub-assembly (6) at least one raising-force booster (10) which can be actuated independently of the latter and via which a positioning movement directed in the raising direction can be transmitted to the roof parts which are to be displaced to their raised position.

2. Convertible vehicle according to claim 1, **characterised in that**, in the case of a roof (1) having two or more roof parts (2, 3 and 4), the size (S) of the gap at a division (T) which is provided Detween each pair of these and also from the windscreen frame can be acted on by the raising-force booster (10).

3. Convertible vehicle according to claim 2, **characterised in that** the raising-force booster (10) has a positioning travel which can be adjusted to suit respective sealing elements which are provided in the divisions (T).

4. Convertible vehicle according to one of claims 1 to 3, **characterised in that** the raising-force booster (10) can be locked when a preset raised position of the roof parts (2, 3 and 4) is reached.

5. Convertible vehicle according to one of claims 1 to 4, **characterised in that** the raising-force booster (10), which is supported on the main mounting (5), has a positioning member which engages with the rear one (4) of the roof parts and which is connected to a positioning drive (A).

6. Convertible vehicle according to one of claims 1 to 5, **characterised in that** the raising-force booster (10) is provided with a lever sub-assembly which has, as a positioning member, a locking lever (11) which can be applied to an entrainment pin (12) belonging to the supporting sub-assembly (6).

7. Convertible vehicle according to claim 6, **characterised in that** the locking lever (11), which is hinged to a support plate (14) to be solid with the bodywork, is connected via a free joint (16) to a central connecting lever (17) and the latter is hinged at the other end to an oscillating actuator (19) which is held to be fixed in rotation at the main mounting (5).

8. Convertible vehicle according to claim 7, **characterised in that** the connecting lever (17) and the oscillating actuator (19) can be displaced to the locking position after the fashion of toggle levers.

9. Convertible vehicle according to claim 7 or 8, **characterised in that** both a traction spring (20) which is held at the main mounting (5) and the positioning drive (A) engage with the oscillating actuator (19) in the region close to the latter's hinge point to the connecting lever (17).

10. Convertible vehicle according to one of claims 5 to 9, **characterised in that** the positioning drive (A) has a Bowden cable (21) which can be moved by hand and/or by a drive member.

11. Convertible vehicle according to one of claims 6 to 10, **characterised in that** the locking lever (11) has, as a contacting surface, an arcuate contour (R) which fits behind the entrainment pin (12).

12. Convertible vehicle according to one of claims 7 to 11, **characterised in that** the components of the raising-force booster (10), together with the support plate (14), form a unit which can be fastened to the main mounting.

## Revendications

1. Véhicule cabriolet comprenant un toit (1) ayant des parties rigides et qui, près d'un palier principal (5) associé à l'arrière de la carrosserie, est soutenu de façon pivotante par des ensembles de support (6) latéraux respectifs comportant un mécanisme de levier (7) qui permet de faire passer le toit (1) dans la position d'ouverture ou de fermeture soit à la main soit au moyen d'un organe d'entraînement (8),
**caractérisé en ce qu'**
au moins un amplificateur de force de fermeture (10) proche de l'ensemble de support (6) et actionnable indépendamment de celui-ci fournit aux parties de toit à placer dans une position de fermeture un mouvement de positionnement orienté dans le sens de la fermeture.

2. Véhicule cabriolet selon la revendication 1,
**caractérisé en ce que**
lorsqu'un toit (1) comprend deux parties ou plus (2, 3 et 4), un joint de séparation (T) prévu entre celles-ci ou bien un joint de séparation (T) prévu vers le cadre du pare-brise est influencé par l'amplificateur de force de fermeture (10) dans les dimensions de la fente (S).

3. Véhicule cabriolet selon la revendication 2,
**caractérisé en ce que**
l'amplificateur de force de fermeture (10) présente une course adaptable aux éléments d'étanchéité respectivement prévus dans les joints de séparation (T).

4. Véhicule cabriolet selon l'une des revendications 1 à 3,
**caractérisé en ce que**
l'amplificateur de force de fermeture (10) est verrouillable une fois qu'une position de fermeture prédéterminée des parties de toit (2, 3 et 4) a été atteinte.

5. Véhicule cabriolet selon l'une des revendications 1 à 4,
**caractérisé en ce que**
l'amplificateur de force de fermeture (10) soutenu au niveau du palier principal (5) présente un actionneur qui agit à l'arrière des parties de toit (4) et il est relié à un actionneur (A).

6. Véhicule cabriolet selon l'une des revendications 1 à 5,
**caractérisé en ce que**
l'amplificateur de force de fermeture (10) est muni d'un ensemble levier présentant comme actionneur un levier de verrouillage (11) positionnable au niveau d'un tourillon d'entraînement (12) de l'ensemble de support (6).

7. Véhicule cabriolet selon la revendication 6,
**caractérisé en ce que**
le levier de verrouillage (11) articulé à une plaque de support (14) solidaire de la carrosserie est relié par une articulation libre (16) à un levier de liaison (17) médian articulé par ailleurs à un basculeur d'entraînement (19) fixé au palier principal (5).

8. Véhicule cabriolet selon la revendication 7,
**caractérisé en ce que**
le levier de liaison (17) et le basculeur d'entraînement (19) peuvent passer à la manière d'une biellette dans la position verrouillée.

9. Véhicule cabriolet selon la revendication 7 ou 8,
**caractérisé en ce qu'**
un ressort de traction (20) retenu au palier principal (5) ainsi qu'un actionneur (A) agissent au niveau du basculeur d'entraînement (19) à proximité de son point d'articulation (18) au levier de liaison (17)

10. Véhicule cabriolet selon l'une des revendications 5 à 9,
**caractérisé en ce que**
l'actionneur (A) présente un câble Bowden (21) déplaçable à la main et/ou à l'aide d'un organe d'entraînement.

11. Véhicule cabriolet selon l'une des revendications 6 à 10,
**caractérisé en ce que**
le levier de verrouillage (11) présente comme surface d'appui un contour arqué (R) venant en engagement derrière le tourillon d'entraînement (12).

12. Véhicule cabriolet selon l'une des revendications 7 à 11,
**caractérisé en ce que**
les composants de l'amplificateur de force de fermeture (10) et la plaque de support (14) forment un ensemble susceptible d'être fixé au palier principal (5).
